# EUROPÄISCHE PATENTSCHRIFT

(11) **EP 4 366 905 B1**
(45) Veröffentlichungstag und Bekanntmachung des Hinweises auf die Patenterteilung: **04.06.2025**
(21) Anmeldenummer: 22740282.3
(22) Anmeldetag: 10.06.2022
(51) Int. Cl.: B23K 20/10

(54) **VERFAHREN ZUR TEMPERATURBESTIMMUNG IN EINER FÜGEZONE**
METHOD FOR DETERMINING THE TEMPERATURE IN A JOINING ZONE
PROCÉDÉ POUR DÉTERMINER LA TEMPÉRATURE DANS UNE ZONE D'ASSEMBLAGE

(30) Priorität: 08.07.2021 DE 102021117697
(43) Veröffentlichungstag der Anmeldung: 15.05.2024
(73) Patentinhaber: Technische Universität Chemnitz Körperschaft des öffentlichen Rechts, 09111 Chemnitz (DE)
(72) Erfinder: WAGNER, Guntram, 67697 Otterberg (DE); GESTER, Andreas, 09126 Chemnitz (DE); THOMÄ, Marco, 09127 Chemnitz (DE)
(74) Vertreter: Rumrich, Gabriele
(86) Internationale Anmeldenummer: PCT/DE2022/100436
(87) Internationale Veröffentlichungsnummer: WO 2023/280340

(56) Entgegenhaltungen:
- DE-A1- 102013 107 637
- DE-A1- 102016 110 228
- DE-C2- 4 206 584
- DUSHKES S Z ET AL: "MEASURING TEMPERATURE RISE DURING ULTRASONIC BONDING", IBM TECHNICAL DISCLOSURE BULLETIN,, vol. 12, no. 7, 1 December 1969 (1969-12-01), pages 1044, XP001343148

## Beschreibung

Die Erfindung betrifft ein Verfahren zur Temperaturbestimmung in einer Fügezone bei einem Vibrationsschweißprozess und findet insbesondere für das Metall-Ultraschallschweißen von artfremden Werkstoffen Anwendung.

Das Ultraschallschweißen ist eine Art von Pressschweißverfahren, bei dem die Fügepartner durch eine punktuell erhöhte Temperatur miteinander verbunden werden. Mittels einer Ultraschallschwingung wird Reibung erzeugt, welche in Kombination mit einem statischen Druck zur kontrollierten Temperaturerhöhung genutzt wird.

In der Mikroelektronik und Verpackungstechnik wird dieses Verfahren seit Jahrzehnten angewendet. Ein weiterer wichtiger Anwendungsfall ist das Verbinden von Aluminiumlitzenkabeln zu Kupferableitern (Terminals) in der Herstellung von Elektrofahrzeugen. Zur Prozesskontrolle und Qualitätssicherung bietet es sich daher an, die Temperatur in der Fügezone zu überwachen und anhand dieser Gut- und Schlechtschweißungen ohne zerstörende Prüfverfahren zu identifizieren.

Zur Bestimmung der Temperatur in der Fügezone beim Metall-Ultraschallschweißen werden häufig Thermoelemente (taktil) sowie Wärmebildkameras und Pyrometer (optisch) eingesetzt. Diese Verfahren sind von großen Messungenauigkeiten betroffen. Bei der optischen Temperaturmessung erfolgt der Blick von außen auf die Fügepartner, sodass nur oberflächliche Temperaturänderungen erfasst werden können. Dadurch sind kaum Rückschlüsse auf die inneren Vorgänge und die innere Temperatur der Fügezone möglich, da die Fügezone von den Schweißwerkzeugen und den Fügepartnern selbst verdeckt wird. Es sind somit nur qualitative Aussagen zur Temperatur möglich.

Bei der taktilen Temperaturmessung hängt die gemessene Temperatur von der Platzierung der Thermoelemente ab.

Thermoelemente funktionieren nach dem sogenannten Seebeck-Effekt, das heißt, tritt über die Länge eines elektrischen Leiters eine Temperaturdifferenz auf, so entsteht ein Potentialunterschied zwischen wärmerem und kälterem Ende des Leiters und es fließt ein Strom. Die Höhe des Potentialunterschieds ist für jeden Werkstoff spezifisch. Bringt man zwei verschiedene elektrische Leiterwerkstoffe in Kontakt und erwärmt diese an ihrer Kontaktstelle, lässt sich zwischen den kalten Enden der beiden Leiter aufgrund der elektromotorischen Kraft somit ein Potentialunterschied messen. Dieser korreliert direkt mit der Temperatur an der Heißstelle. Typischerweise wird dieser Effekt in Thermoelementen genutzt, welche häufig aus Paarungen aus NiCr/Ni, CuNi/Fe etc. bestehen.

Da es beim Metall-Ultraschallschweißen zu lokal begrenzten Aufschmelzungen kommen kann, ist es kaum möglich, reproduzierbar und präzise die Fügezonentemperatur zu bestimmen. Die Einbringung von Thermoelementen muss zudem händisch durch den Bediener erfolgen. Das Thermoelement stellt in der Fügezone einen Fremdkörper dar, der den Schweißprozess negativ beeinflussen kann. Zudem wird das Thermoelement im Schweißprozess zerstört. Aufgrund dieser Tatsachen ist die Einbringung von Thermoelementen in die Fügezone für eine Prozessüberwachung unwirtschaftlich.

Ein Verfahren nach dem Oberbegriff des Anspruchs 1 ist der DE10 2013 107637 zu entnehmen.

Ein Verfahren zur Temperaturführung beim Widerstandsschweißen wird in der Druckschrift DD 2 52 778 A1 offenbart, wobei zwei Messelemente verwendet werden. Es wird während des Schweißprozesses die der Schweißspannung zwischen zwei Elektroden sich überlagernde Thermospannung zwischen einer der Elektroden und den zu verbindenden Werkstoffen gemessen oder es erfolgt ein direktes Messen zwischen Werkstücken unterschiedlichen Werkstoffes in der Weise, dass eine Messleitung mit einem der Werkstücke leitend verbunden wird und eine zweite Messleitung entweder mit der unteren Elektrode oder mit dem oberen Werkstück in Kontakt gebracht wird.

In der Druckschrift JP 2006-159 277 A wird ein Ultraschallschweißprozess mit Temperaturmessung durch ein Thermoelement offenbart, bei dem ein Aluminiumkabel mit einer Basis aus Bronze verschweißt wird. Ausbildung des Thermoelementes ist allerdings in der Druckschrift nicht offenbart.

Aus der Druckschrift DE 22 10 855 C2 sind ein Verfahren und eine Vorrichtung zum direkten Verbinden von Metallteilen miteinander und Anwendung des Verfahrens beschrieben. Das Verbinden der Metallteile erfolgt durch Energieimpulse, die durch Vibration erzeugt werden und im Schall- bzw. Ultraschallbereich liegen. Mit dem Verfahren können unter anderem Kupferbauteile mit Aluminiumbauteilen verbunden werden. Während des Verbindungsprozesses können Temperaturen auftreten, die über 1000 °C liegen, wobei diese jedoch eng lokal begrenzt sind. Somit wird eine großflächige Aufheizung der Bauteile vermieden. Die Temperatur wird mittels eines Thermoelements erfasst.

Die Energie in der Fügestelle, die als thermoelektrisches Potential gemessen wird, kann an der Grenzfläche zweier miteinander zu verbindender Schichten angezeigt werden.

In der Druckschrift DE 42 06 584 C2 wird eine Vorrichtung und ein Verfahren zum Verbinden zweier Bauteile mittels Ultraschalls beschrieben. Gemäß dem Verfahren wird eine Temperaturmessung in unmittelbarer Nähe der Schweißstelle durchgeführt, um die optimalen Schweißparameter zu ermitteln. Mit Hilfe der Temperaturmessung als Führungsgröße wird so ein Regelkreis aufgebaut. Zur Temperaturmessung können sowohl berührungslose als auch berührende Systeme zur Anwendung kommen, wobei aus Kostengründen und wegen der größeren Messgenauigkeit den berührenden Ausführungen der Vorzug eingeräumt wird. In diesem Zusammenhang sollen Thermoelemente, die in der Sonotrodenspitze angeordnet sind, zum Einsatz kommen. Es besteht jedoch auch die Möglichkeit, dass das Thermoelement auf der Schweißnaht geführt wird.

Die Druckschrift DE 10 2010 050 387 A1 beschreibt ein Verfahren und ein System zur Online-Qualitätsüberwachung und -Steuerung eines Vibrationsschweißprozesses. Gemäß dem Verfahren werden Daten der Fügestelle mithilfe von Sensoren erfasst, die in Bezug auf Schweißgrenzflächen eines Werkstückes positioniert sind. Die Messwerte werden zuerst ermittelt und folgend mit, in einer Datenbank abgelegten Messwerte verglichen. Das Ergebnis dieses Vergleichs wird dazu verwendet, die Schweißprozessparameter zu optimieren.

Dabei liefern die Messwerte keine konkreten physikalischen Größen (Temperatur, Kraft, elektrischer Strom usw.), sondern es werden Merkmale klassifiziert. Die Summe dieser Merkmale lässt Schlüsse zu, die die Qualität der erzeugten Schweißnaht charakterisieren. Die Messwerterfassung und der Vergleich mit Datensätzen der Datenbank erfolgt online, also während des Schweißvorgangs. Somit ist es möglich, eine Prozessoptimierung während des Fügens vorzunehmen.

Aufgabe der Erfindung ist es, ein Verfahren zur Temperaturbestimmung in einer Fügezone zu entwickeln, welche eine zerstörungsfreie Prozesskontrolle und Qualitätssicherung in Bezug auf die Temperatur der Schweißstelle für Pressschweißverfahren bereitstellen.

Diese Aufgabe wird mit den Merkmalen des ersten Patentanspruchs gelöst.

Vorteilhafte Ausgestaltungen ergeben sich aus den Unteransprüchen.

Das Verfahren dient der Temperaturbestimmung in einer Fügezone in einem Vibrationsschweißprozess, wobei ein erster Fügepartner und ein zweiter Fügepartner miteinander verschweißt werden, wobei der erste und zweite Fügepartner als Thermoelement agieren und mittels eines, mit dem ersten Fügepartner an einer Kaltstelle kontaktierten ersten Messelements und eines, mit dem zweiten Fügepartner zu einer Heißstelle beabstandet kontaktierten zweiten Messelements eine Potentialdifferenz zwischen dem ersten und zweiten Fügepartner während des Schweißprozesses erfasst wird, wobei das zweite Messelement im Bereich einer Kontaktierung mit dem zweiten Fügepartner eine Temperatur höher der Temperatur der Kaltstelle und einen artgleichen Werkstoff zu dem zweiten Fügepartner aufweist, wobei die Potentialdifferenz mit materialspezifischen Kalibrierungsdaten abgeglichen und mittels eines Datenverarbeitungssystems verarbeitet wird und dass der Schweißprozess anhand der ermittelten Potentialdifferenz gesteuert wird, der erste Fügepartner in Form eines Litzenkabels ausgebildet ist, das erste Messelement als Messleitung ausgebildet ist, die mit ihrem ersten Ende mit dem ersten Fügepartner und mit ihrem zweiten Ende an einem Messpunkt mit einem Datenverarbeitungssystem verbunden ist, der erste Fügepartner und/oder das erste Messelement aus Aluminium hergestellt sind, der zweite Fügepartner und/oder das zweite Messelement aus Kupfer hergestellt sind und die Temperatur der Kaltstelle der Zimmertemperatur von ca. 20° entspricht und dass die Kontaktierung im Bereich der Heißstelle bei einer Temperatur höher der Zimmertemperatur erfolgt. Bevorzugt wird die Potentialdifferenz mit materialspezifischen Kalibrierungsdaten abgeglichen so dass die ermittelten Daten mittels eines Datenverarbeitungssystems verarbeitet werden.

Besonders bevorzugt kann der Schweißprozess anhand der ermittelten Potentialdifferenz gesteuert werden, wobei der Vibrationsschweißprozess in einer vorteilhaften Ausgestaltung ein Metall-Ultraschallschweißen ist.

Vorteilhafter Weise ist der zweite Fügepartner in Form eines Litzenkabels oder in Form eines massiven Körpers ausgebildet. Daher können auch beide Fügepartner in Form von massiven Körpern oder in Form von Litzenkabeln ausgebildet sein. Des Weiteren kann auch für davon abweichende Fügepartnergeometrien, wie beispielsweise Blech/Blech oder Folie/Folie das Verfahren Anwendung finden. Eine Kontaktierung kann hier aufgrund der wesentlich geringeren Deformation der Fügepartner auch um einiges einfacher ausfallen.

Bevorzugt entspricht die Temperatur der Kaltstelle im Wesentlichen der Zimmertemperatur. Die zweite Kontaktierung ist im Bereich der Heißstelle angeordnet, wobei im Bereich der zweiten Kontaktierung eine Temperatur höher der Zimmertemperatur anliegt. Der erste Fügepartner und das erste Messelement sind erfindungsgemäß aus Aluminium. Der zweite Fügepartner und das zweite Messelement sind erfindungsgemäß aus Kupfer hergestellt. Jedoch sind auch andere artfremde Werkstoffpaarungen geeignet, beispielsweise Aluminium/Nickel, Nickel/Kupfer, oder ähnliches.

Die Vorrichtung zur Temperaturbestimmung in einer Fügezone in einem Vibrationsschweißprozess, wobei ein erster Fügepartner und ein zweiter Fügepartner miteinander schweißbar sind, weist eine erste Kontaktierung des ersten Fügepartners mit einem ersten Messelement an einer ersten Kaltstelle und eine zweite Kontaktierung des zweiten Fügepartners mit einem zweiten Messelement zu einer Heißstelle beabstandet auf, wobei die Fügepartner über die Messelemente mit einer Datenverarbeitung verbunden sind. Das zweite Messelement weist des Weiteren einen artgleichen Werkstoff zu dem zweiten Fügepartner auf.

Bevorzugt ist die Vorrichtung so ausgebildet, dass zwischen dem zweiten Messelement und der Datenverarbeitung eine zweite Kaltstelle angeordnet ist.

In einer ersten Ausgestaltung ist das erste Messelement in Form einer Messleitung ausgebildet. Alternativ kann das erste Messelement in Form einer federnden Messspitze ausgebildet sein. Die federnde Messspitze kann mittels eines Seitenschiebers der Schweißanlage zugeführt sein.

Die Erfindung wird nachfolgend an einem Ausführungsbeispiel und zugehörigen Zeichnungen näher erläutert.

Es zeigen:
- Figur 1: eine schematische Darstellung des erfindungsgemäßen Verfahrens,
- Figur 2: einen Metall-Ultraschallgeschweißten Verbund aus einem Aluminiumkabel und einem Kupferterminal,
- Figur 3: eine Vorrichtung zum Messen einer Potentialdifferenz.

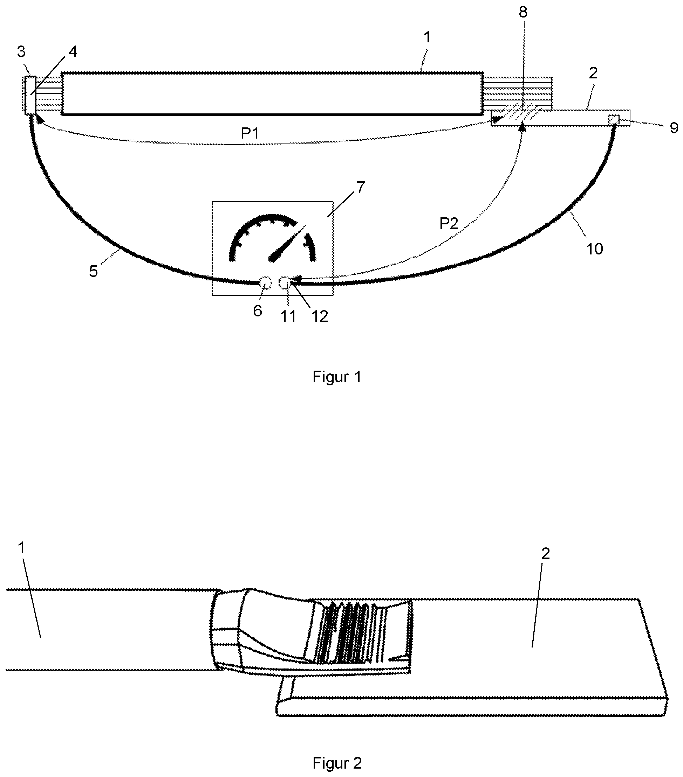

Das Verfahren wird in einer schematischen Darstellung in Figur 1 dargestellt. Gemäß den Ausführungsbeispielen wird ein erster Fügepartner 1 in Form eines Aluminiumlitzenkabels mit einem zweiten Fügepartner 2 in Form eines Kupferterminals verschweißt. Das Schweißverfahren ist bevorzugt ein Metall-Ultraschallschweißverfahren.

Der erste Fügepartner 1 weist an einer ersten Kaltstelle 3 mit einer Temperatur von ca. 20°C (Zimmertemperatur) eine erste Kontaktierung 4 mit einem ersten Messelement 5 auf. Das erste Messelement 5 ist in Form einer Messleitung ausgebildet, wobei das Material beliebig gewählt sein kann. Die Kontaktierung erfolgt in diesem Ausführungsbeispiel mittels einer Stahlkontaktierung. Die Messleitung ist mit ihrem ersten Ende mit dem ersten Fügepartner 1 und mit ihrem zweiten Ende an einem Messpunkt 6 mit einem Datenverarbeitungssystem 7 verbunden.

Im Fügebereich des ersten und zweiten Fügepartners 1, 2 entsteht während des Schweißvorgangs eine Heißstelle 8, die eine Temperatur von ca. 250°C aufweist.

Zu der Heißstelle 8 beabstandet ist eine zweite Kontaktierung 9 des zweiten Messelements 10 angeordnet, wobei die zweite Kontaktierung 9 ebenfalls gemäß der Heißstelle 8 eine Temperatur von ca. 250°C aufweist. Das zweite Messelement 10 ist ebenfalls in Form einer Messleitung ausgebildet, wobei das zweite Messelement 10 den gleichen Werkstoff wie der zweite Fügepartner 2 aufweist. Die zweite Messleitung 10 ist mit ihrem ersten Ende mit dem zweiten Fügepartner 2 und mit ihrem zweiten Ende an einem zweiten Messpunkt 11 mit einem Datenverarbeitungssystem 7 verbunden. In der Ausgestaltung ist die Messleitung aus Kupfer gebildet. So kann ein verlustfreier Wärmeübergang zwischen dem Kupfer-Terminal und der Kupfer-Messleitung erreicht werden.

Durch die Temperaturdifferenz zwischen der ersten Kaltstelle 3 des ersten Fügepartners 1 und der Heißstelle 8 sowie der zweiten Kontaktierung 9 entsteht ein Potentialunterschied P1 zwischen dem wärmeren und dem kälteren Ende der Fügepartner, wodurch ein Strom fließt. Dieser Stromfluss wird mittels des Datenverarbeitungssystems 7 erfasst und verarbeitet.

Da sich an dem zweiten Messpunkt 11 aufgrund des Materialunterschieds zwischen der Kupferleitung und dem Messgerät eine zweite Kaltstelle 12 bildet, kann zwischen der zweiten Kontaktierung 9 und dem Messpunkt 11 ebenfalls ein Potentialunterschied P2 ermittelt werden. Die Temperatur der zweiten Kaltstelle 12 beträgt ähnlich der ersten Kaltstelle 3 ca. 20°C.

Im Folgenden wird die, von dem Datenverarbeitungssystem 7 erfasste Potentialdifferenz P1 mit materialspezifischen Kalibrierungsdaten, welche in dem Datenverarbeitungssystem 7 hinterlegt sind, abgeglichen und weiterverarbeitet. Anhand der Potentialdifferenz P1 und den daraus resultierenden Daten kann der Schweißprozess gesteuert werden.

Figur 2 zeigt einen ersten Fügepartner 1 und einen zweiten Fügepartner 2 nach dem Fügeprozess. Der erste Fügepartner 1 ist in Form eines Aluminiumlitzenkalbels ausgebildet. Das zweite Fügeelement 2 ist in Form eines massiven Körpers aus Kupfer ausgestaltet. Die Verbindung erfolgte mittels Metall-Ultraschallschweißens.

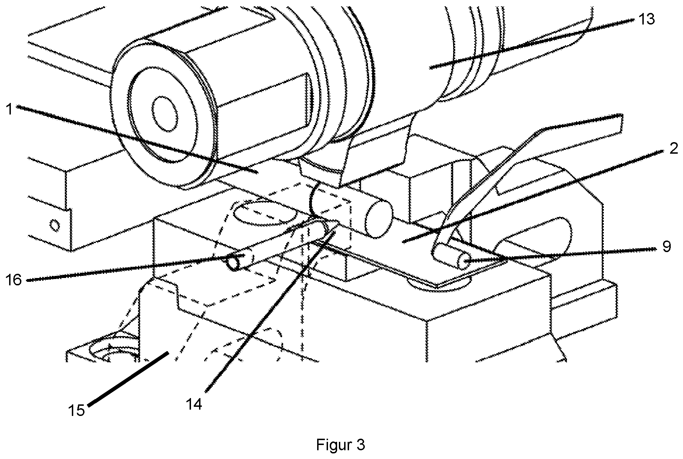

Eine Vorrichtung zur Temperaturbestimmung in einer Fügezone in einem Vibrationsschweißprozess ist in Figur 3 dargestellt. Das Schweißen erfolgt mittels einer über dem ersten und zweiten Fügepartner 1, 2 angeordneten Sonotrode 13. Für eine industrielle Produktion kann die Kontaktierung automatisiert erfolgen. Die Kontaktierung 9 des zweiten Fügepartners 2 (Kupfer-Terminal) wird derart umgesetzt, dass der zweite Fügepartner 2 während des Fügeprozesses fixiert ist. Da der erste Fügepartner 1 (Aluminiumlitzenkabel) im Schweißprozess einer starken plastischen Deformation und damit einhergehend einer Geometrieänderung unterworfen ist erfolgt daher eine laterale Einbringung einer federnden Messspitze 14 aus Aluminium in den ersten Fügepartner 1 über einen Seitenschieber 15 (Niederhalter) der Schweißanlage. Alternativ wäre eine federnd gelagerte Kontaktierung auf die Kopfseite des Litzenkabels oder die Anbringung eines Messkabels am entfernten und kalten Ende (Kaltstelle) des Litzenkabels denkbar. Die Messspitze 14 ist aus Reinaluminium ausgebildet und weist ein isolierendes Keramikröhrchen 16 um die Messspitze 14 auf.

### Bezugszeichenliste

- 1: Erster Fügepartner
- 2: Zweiter Fügepartner
- 3: Erste Kaltstelle
- 4: Erste Kontaktierung
- 5: Erstes Messelement
- 6: Erster Messpunkt
- 7: Datenverarbeitungssystem
- 8: Heißstelle
- 9: Zweite Kontaktierung
- 10: Zweites Messelement
- 11: Zweiter Messpunkt
- 12: Zweite Kaltstelle
- 13: Messspitze
- 14: Seitenschieber

## Patentansprüche

1. Verfahren zur Temperaturbestimmung in einer Fügezone in einem Vibrationsschweißprozess, wobei ein erster Fügepartner (1) und ein zweiter Fügepartner (2) miteinander verschweißt werden, wobei der erste Fügepartner in Form eines Litzenkabels ausgebildet ist, der erste Fügepartner aus Aluminium hergestellt ist, und der zweite Fügepartner aus Kupfer hergestellt ist, **dadurch gekennzeichnet, dass** der erste und zweite Fügepartner (1, 2) als Thermoelement agieren wobei mittels eines, mit dem ersten Fügepartner (1) an einer Kaltstelle (3) kontaktierten ersten Messelements (5) und eines, mit dem zweiten Fügepartner (2) zu einer Heißstelle (8) beabstandet kontaktierten zweiten Messelements (10) eine Potentialdifferenz (P1) zwischen dem ersten und zweiten Fügepartner (1, 2) während des Schweißprozesses erfasst wird,
- wobei das zweite Messelement (10) im Bereich einer Kontaktierung (9) mit dem zweiten Fügepartner (2) eine Temperatur höher der Temperatur der Kaltstelle (3) und aus Kupfer besteht,
- dass die Potentialdifferenz (P1) mit materialspezifischen Kalibrierungsdaten abgeglichen und mittels eines Datenverarbeitungssystems (7) verarbeitet wird und dass der Schweißprozess anhand der ermittelten Potentialdifferenz (P1) gesteuert wird
- dass das erste Messelement (5) als Messleitung ausgebildet ist, die mit ihrem ersten Ende mit dem ersten Fügepartner (1) und mit ihrem zweiten Ende an einem Messpunkt (6) mit dem Datenverarbeitungssystem (7) verbunden ist,
- dass das zweite Messelement (1) als Messleitung ausgebildet ist, die mit ihrem ersten Ende mit dem zweiten Fügepartner (2) und mit ihrem zweiten Ende an einem zweiten Messpunkt (11) mit dem Datenverarbeitungssystem (7) verbunden ist,
- dass das erste Messelement (5) aus Aluminium hergestellt ist,
- dass die Temperatur der Kaltstelle der Zimmertemperatur von ca. 20° entspricht und dass die Kontaktierung im Bereich der Heißstelle (8) bei einer Temperatur höher der Zimmertemperatur erfolgt.

2. Verfahren nach einem Anspruch 1, **dadurch gekennzeichnet, dass** der Vibrationsschweißprozess ein Metall-Ultraschallschweißen ist.

3. Verfahren nach Anspruch 1 oder 2, **dadurch gekennzeichnet, dass** der zweite Fügepartner (2) in Form eines Litzenkabels oder eines massiven Körpers ausgebildet ist.

## Claims

1. Method for determining the temperature in a joining zone in a vibration welding process, wherein a first joining partner (1) and a second joining partner (2) are welded to one another, wherein the first joining partner is formed in the shape of a stranded wire, the first joining partner is made of aluminum, and the second joining partner is made of copper, **characterized in** the first and second joining partners (1, 2) act as a thermocouple, wherein a potential difference (P1) between the first and second joining partners (1, 2) is detected during the welding process by means of a first measuring element (5), which is in contact with the first joining partner (1) at a cold spot (3), and a second measuring element (10), which is in contact with the second joining partner (2) at a hot spot (8) at a distance,
- wherein the second measuring element (10) has a temperature higher than the temperature of the cold spot (3) in the region of a contact (9) with the second joining partner (2) and consists of copper,
- the potential difference (P1) is compared with material-specific calibration data and processed by means of a data processing system (7) and that the welding process is controlled on the basis of the determined potential difference (P1),
- that the first measuring element (5) is designed as a measuring line, which is connected by its first end to the first joining partner (1) and by its second end to the data processing system (7) at a measuring point (6),
- that the second measuring element (1) is designed as a measuring line, which is connected by its first end to the second joining partner (2) and by its second end to the data processing system (7) at a second measuring point (11),
- that the first measuring element (5) is made of aluminum,
- that the temperature of the cold spot corresponds to room temperature of approximately 20° and that the contact in the area of the hot spot (8) occurs at a temperature higher than room temperature.

2. Method according to claim 1, **characterized in that** the vibration welding process is a metal ultrasonic welding process.

3. Method according to claim 1 or 2, **characterized in that** the second joining partner (2) is designed in the form of a stranded wire or a solid body.

## Revendications

1. Procédé de détermination de la température dans une zone d'assemblage dans un processus de soudage par vibration, dans lequel un premier partenaire d'assemblage (1) et un deuxième partenaire d'assemblage (2) sont soudés l'un à l'autre, dans lequel le premier partenaire d'assemblage est réalisé sous la forme d'un câble toronné, le premier partenaire d'assemblage étant réalisé en aluminium et le deuxième partenaire d'assemblage étant réalisé en cuivre,
**caractérisé en ce que**
le premier et le deuxième partenaire d'assemblage (1, 2) agissent comme un thermocouple, dans lequel, au moyen d'un premier élément de mesure (5) mis en contact avec le premier partenaire d'assemblage (1) au niveau d'un point froid (3) et d'un deuxième élément de mesure (10) mis en contact avec le deuxième partenaire d'assemblage (2) à distance d'un point chaud (8), une différence de potentiel (P1) est détectée entre le premier et le deuxième partenaire d'assemblage (1, 2) pendant le processus de soudage,
- dans lequel le deuxième élément de mesure (10) présente, dans la zone de mise en contact (9) avec le deuxième partenaire d'assemblage (2), une température supérieure à la température du point froid (3) et est constitué de cuivre,
- que la différence de potentiel (P1) est comparée à des données d'étalonnage spécifiques au matériau et traitée au moyen d'un système de traitement de données (7) et que le processus de soudage est commandé sur la base de la différence de potentiel (P1) déterminée,
- que le premier élément de mesure (5) est réalisé sous la forme d'un câble de mesure qui est relié par sa première extrémité au premier partenaire d'assemblage (1) et par sa deuxième extrémité au système de traitement de données (7) à un point de mesure (6),
- que le deuxième élément de mesure (1) est réalisé sous la forme d'un câble de mesure qui est relié par sa première extrémité au deuxième partenaire d'assemblage (2) et par sa deuxième extrémité au système de traitement de données (7) à un deuxième point de mesure (11),
- que le premier élément de mesure (5) est réalisé en aluminium,
- que la température du point froid correspond à la température ambiante d'environ 20° et que la mise en contact dans la zone du point chaud (8) s'effectue à une température supérieure à la température ambiante.

2. Procédé selon la revendication 1, **caractérisé en ce que** le processus de soudage par vibration est un soudage par ultrasons de métaux.

3. Procédé selon la revendication 1 ou 2, **caractérisé en ce que** le deuxième partenaire d'assemblage (2) est réalisé sous la forme d'un câble toronné ou d'un corps massif.
